# EUROPEAN PATENT SPECIFICATION

(11) **EP 4 351 156 B1**
(45) Date of publication and mention of the grant of the patent: **02.04.2025**
(21) Application number: 24150125.3
(22) Date of filing: 11.04.2007
(51) Int. Cl.: H04L 12/28, H04N 7/173, H04N 21/2668, H04N 21/61, H04N 5/76, H04N 21/436, H04N 21/443, H04N 21/472, H04N 21/4722, H04N 21/482, H04N 21/6377, H04N 21/6587

(54) **GENERATING MEDIA CONTROL INFORMATION IN AN INTERACTIVE MEDIA CONTENT DELIVERY SYSTEM**
ERZEUGUNG VON MEDIALEN KONTROLLINFORMATIONEN IN EINEM SYSTEM INTERAKTIVER MEDIENINHALTE
GÉNÉRER DES INFORMATIONS DE CONTRÔLE DES MÉDIAS DANS UN SYSTÈME DES MÉDIAS INTERACTIFS

(30) Priority: 12.04.2006 US 40371406
(43) Date of publication of application: 10.04.2024
(62) Divisional of application: 18172739.7
(73) Proprietor: Adeia Guides Inc., San Jose, CA 95134 (US)
(72) Inventor: WESTBERG, Thomas E., Stow, 01775 (US); BOVENSCHULTE, David, River Vale, 07675 (US); FERIEIRA, Edgar A., Stamford, 06905 (US)
(74) Representative: Haley Guiliano International LLP

(56) References cited:
- WO-A1-03/021828
- WO-A1-2005/041594
- WO-A1-2006/010733
- WO-A2-2005/074283
- DE-A1- 19 547 604
- US-A1- 2001 052 134
- US-A1- 2005 055 724
- US-A1- 2006 053 436

## Description

### Reference to Related Applications

This application is co-pending with Docket No. UV-307A, entitled "Interactive Media Content Delivery Using Enhanced Wireless Backchannel Communications," having U.S. Patent Application No. 11/403,709 and Docket No. UV-307B, entitled "Interactive Media Content Delivery Using an Intermediate Wireless Communications Device," having U.S. Patent Application No. 11/403,724, all filed on April 12, 2006 .

### Background

This invention relates to media content guidance systems, devices, and methods, and more particularly, to media content delivery using a backchannel communications network to facilitate media content programming, control, and/or delivery. The invention is defined in the accompanying independent claims. Some preferred features are recited in the dependent claims.

Cable, satellite, and broadcast television systems are media content delivery systems that provide viewers with a large number of television channels and other media content. Interactive program guides (IPGs) have been developed that allow television program information, and information about a particular type of media, to be displayed on a viewer's television.

In analog cable TV systems, one of the cable channels may be reserved for delivering and displaying programming information. Also, data may be transmitted to the STB via the in-band vertical blanking interval (VBI) of one television channel broadcast. In a digital cable TV and/or satellite system, program schedule information, applications, and/or systems software, may be transmitted to equipment located on the viewer's premises (usually a "digital set-top box" or STB) by way of broadcast, addressable messages, cable, direct satellite or some other form of transmission. The STB may also contain memory so that the program schedule information can be stored for later viewing.

The program schedule information stored in the STB is typically periodically updated (e.g., on a continuous, daily, weekly, or biweekly basis). A microprocessor within the STB cooperates with the viewer's television set to display the stored program schedule information and to implement other functions of the IPG in response to user-generated signals, typically from a remote control device.

IPGs allow users to access television program listings in different display formats. For example, a user may desire to view a grid of program listings organized in a channel-ordered list. Alternatively, the user may desire to view program listings organized by time, by theme (movies, sports, etc.), or by title (i.e., alphabetically ordered). An IPG may be referred to as and/or include the features of an electronic programming guide (EPG).

For cable TV Multiple Service Operator (MSO) networks that support two-way communications between a user's end device and the MSO's headend, users may interactively select "video on demand" (VOD) and "pay per view" (PPV) media content directly with the IPG using their remote control unit for viewing. A user may also record media content to a network or local digital video recorder (DVR) via their remote control unit/device. For example, the user may place a highlight region on top of a desired program listing and press a "record" button on the remote control unit. The "record" command is then sent from the end user device, e.g., STB, to the MSO headend via the cable tree and branch network to enable the program recording.

Pay programs may be ordered by placing the highlight region on a pay program listing and pressing an "order" button. The "order" message is sent from the end user device to the MSO headend to initiate ordering and delivery of the program to the end user device. Some IPGs allow parents to block certain television programs based on criteria such as ratings information.

Certain media networks such as cable TV/MSO networks, satellite networks, and/or over-the-air media content networks, provide one-way broadcast and/or addressable media content delivery. In these one-way media networks or systems having one-way communications links to an end user device, there is no direct back channel for communications from the end user and/or end user media device to the MSO headend or media provider distribution facility or network. For one-way cable networks, users may indirectly order particular media content, e.g., movies, via the public switch telephone network (PSTN).

For example, a user may order a movie by calling a particular destination telephone number and using the touch tone keys to order a particular movie or by interfacing with a customer service representative. For satellite television and/or movie providers, users may be required to order programs via the PSTN. Also, the recently developed CableCARD technology or other PCMCIA card technology, supported by certain cable TV networks, only support one-way media content delivery to cable ready televisions, preventing subscribers from ordering VOD and PPV media content.

More particularly, in a media delivery system where the provider uses one-way video delivery with no direct backchannel communications, users either have no method or a relatively inconvenient method of requesting programs and/or services from the provider using the PSTN, especially in real-time and/or near real-time. In a one-way cable TV environment, each customer cannot readily order a PPV program without having to pick up a telephone and call the cable TV provider. This process takes time, resulting in inconvenient delays for the consumer, and requires the users to interface with a customer service representative or migrate through a slow interactive touch tone process. In a satellite environment, true VOD ordering and VCR-type controls for VOD are not available because it is impractical to provide STB communications back to the satellite provider via the over-the-air satellite interface. Accordingly it is desirable to enable a user equipment device to control media content delivery via a backchannel communications link or network.

There are also sometimes difficulties associated with a content user's interaction with an MSO provider. For example, the distribution facility for different MSOs can use different protocols or different information formats for communications, preventing the use of a common back channel mechanism for media content delivery.

WO 2005/074283 A2 discloses interactive television program guide systems with digital video recording support. In one embodiment a video-on-demand application is supported by a server storing content from a service provider. An interactive television application is used to support the functions of a personal video recorder.

Accordingly, it is desirable to provide interactive media content delivery using an intermediate communications server between an end user and the media content provider to enable communications regardless of the information format used by an MSO network.

### Summary

In accordance with the principles of the present invention, a user equipment device, e.g., STB, that interfaces with a one-way media network is configured to communicate with a media content provider via a backchannel communications network such as a local area network or wireless network. The backchannel network enables the user equipment to deliver media content control commands to a media content source and/or distribution facility to establish interactive two-way media programming for a one-way media network provider. Also, a clearinghouse, intermediate, or central communications server may be employed that enables back channel communications between a media content user equipment device and the distribution facilities of one or more media content service providers, regardless of the communications protocols or information formats utilized by each distribution facility.

In one aspect, a user equipment device interactively controls the delivery of media content from a one-way media network by receiving a user command and then sending a media control message to a media content source via a backchannel network in response to the user command. The user equipment device then receives the media content, directly or via a distribution facility or via other network elements, from the media content source from the one-way media network.

The backchannel network may include a local area network, a wireless local area network, or a cellular telephone network. The media content source may include a distribution facility. In one feature, the user equipment device is configured to send a media control message to at least one distribution facility whereupon the distribution facility retrieves the media content from the media content source.

The clearinghouse may include a web server or website located in a location that is remote to a user equipment device, e.g., STB, and the distribution facility of the user's media content provider. The clearinghouse advantageously allows any user equipment device to order media content such as movies using a standard application such as a standard IPG, standard web browser, or other standard application. The clearinghouse performs a conversion or translation of the standard messages sent from any user equipment device into any message format used by a particular media content provider and its distribution facility. The clearinghouse effectively enables a back channel communications path from a user equipment device to any distribution facility, in any location and associated with any media content provider.

In one aspect, an interactive media guidance system includes at least one media content source configured for storing media content. At least one user equipment device such as a cable TV or satellite STB is configured to send a media control message to a clearinghouse server via a communications network such as the Internet. The user equipment is also capable of receiving media content such as movies, music, television (TV) programs, and like media content.

In one feature, the media guidance system enables a user equipment device to interface with one or more distribution facilities. Each distribution facility is capable of receiving a media control message from a clearinghouse. A media control message may include a request and/or order to record, download, or view a particular movie or song. Each distribution facility is capable of retrieving the media content from at least one media content source such as a media outlet or music database. Each distribution facility is also capable of sending the media content to a user equipment device.

In one configuration, the clearinghouse is capable of communicating with a user equipment device and at least one distribution facility. The clearinghouse is configured to receive a media control message from a user equipment device, process the media control message, and then send the media control message to at least one distribution facility. The clearinghouse may determine which distribution facility to send the media control message. The determining may be based on the location, identity, or subscriber (user) information related to the user equipment device.

In another feature, the clearinghouse converts at least a portion of the media control message from a first information format into a second information format. The first and/or second information formats may include a markup language. The markup language may include HTML, XML, SGML, WML, or like markup languages.

The media content may include a media program, a media program listing, a media program schedule, media content metadata, a user equipment device application, or a user equipment device application update. The media control information may include an order for a media program, a media program listing, a media program schedule, a user equipment device application, media content metadata, a VCR-like command, or a user equipment device application update. The VCR-like command may include, without limitation, a command such as play, pause, fast forward, and rewind.

In a further feature, the clearinghouse determines whether a media control message originated from an authorized user equipment device. The clearinghouse may include an interactive programming guide, a web server, or a user application distribution server. The clearinghouse may include a subscriber database, a user equipment application database, a network provider database, or a media content database.

In another feature, the clearinghouse is configured for registering at least one user equipment device for clearinghouse services and/or access to the clearinghouse. The clearinghouse may be configured for sending a user equipment device application to a user equipment device. In a further feature, the media guidance system includes a media information server that is capable of receiving a media control message from the clearinghouse and sending the media control message to a distribution facility.

### Brief Description of the Drawings

These and other features and advantages of the invention will be more fully understood by the following illustrative description with reference to the appended drawings, in which like elements are labeled with like reference designations and which may not be to scale.
FIG. 1 includes an interactive media guidance system in accordance with an illustrative embodiment of invention.
FIG. 2 is a block diagram of a set-top box arrangement according to an illustrative embodiment of the invention.
FIG. 3 is a block diagram of a television and digital video recorder arrangement according to an illustrative embodiment of the invention.
FIG. 4 is a view of a remote control device according to an illustrative embodiment of the invention.
FIG. 5 is a block diagram of a personal computer system arrangement according to an illustrative embodiment of the invention.
FIG. 6 is a block diagram of a computer system according to an illustrative embodiment of the invention.
FIG. 7 is a functional block diagram showing various applications within a clearinghouse according to an illustrative embodiment of the invention.
FIG. 8 includes an exemplary view of the display of information provided to a user equipment device by a clearinghouse IPG according to an illustrative embodiment of the invention.
FIG. 9 is a conceptual block diagram of an interactive media guidance system including a clearinghouse that facilitates the exchange of media control messages and media content between user equipment devices and distribution facilities 104 according to an illustrative embodiment of the invention.
FIG. 10 is a flow diagram of a process for requesting media content information and/or services using a clearinghouse according to an illustrative embodiment of the invention.
FIG. 11 is a block diagram of a media guidance system where a user equipment device establishes back channel communications with a distribution facility using a wireless network and clearinghouse server according to an illustrative embodiment of the invention.
FIG. 12 is a block diagram of a media delivery system using a remote control device to establish a second data channel that facilitates back channel communications from a user equipment device to a media content distribution facility according to an illustrative embodiment of the invention.

### Illustrative Description

The invention, in certain embodiments, provides an intermediate communications server, such as a clearinghouse server, to facilitate back channel communications from a user equipment device to any media content distribution facility to enable media content delivery to a user equipment device regardless of the information format used by a particular distribution facility.

Media content includes any information that can be perceived by a person such as, without limitation, visual and audio information. Visual information may include video clips, streaming video, movies, images, pictures, television programs, media programs, and like visual media content. Audio information may include streaming audio, audio files (MP3), audio music files, broadcast audio, and like audio media content. Media content may also include information about the media content and/or media programs such as a listing of available media programs.

A media delivery system or interactive media guidance system includes any information system capable of transmitting media content to an end user. A media device or media destination device is any device and/or apparatus capable of receiving and/or presenting media content to an end user such as a video display, television, computer, audio player, stereo, set-top box (STB), digital video recorder (DVR), personal video recorder (PVR), VCR, personal digital assistant (PDA), cellular telephone, and like device. The MSO network is a cable TV network operated by a server provider typically servicing a large geographic area including thousands of media content users.

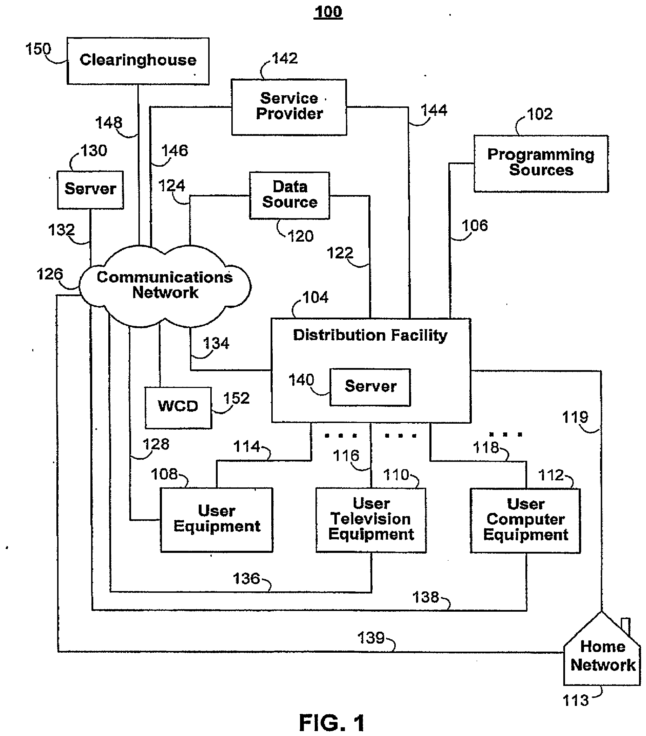

An illustrative interactive media guidance system 100 in accordance with the present invention is shown in FIG. 1. Media such as television programming and digital music may be provided from programming sources 102 to television distribution facilities, such as distribution facility 104, using communications path (or link) 106. Communications path 106 may be a satellite path, a fiber-optic path, a cable path, or any other suitable wired or wireless communications path or combination of such paths.

Programming sources 102 may be any suitable sources of television and music programming, such as television broadcasters (e.g., NBC, ABC, and HBO) or other television or music production studios. Programming sources 102 may provide television programming in a variety of formats in high definition and standard definition, such as, for example, 1080p, 1080i, 720p, 480p, 480i, and any other suitable format.

Distribution facility 104 may be a cable system headend, a satellite television distribution facility, a television broadcaster, or any other suitable facility for distributing video media (e.g., television programs, video-on-demand programs, and video clips), audio media (e.g., music programming and music clips), and other media (e.g., web pages and interactive applications) to users. There are typically numerous television distribution facilities 104 in system 100, but only one is shown in FIG. 1 to avoid overcomplicating the drawing.

Distribution facility 104 may be connected to various user equipment devices 108, 110, 112, and 152. Such user equipment devices may be located, for example, in the homes of users. User equipment devices may include user television equipment 110, user computer equipment 112, a wireless communications device (WCD) 152, or any other type of user equipment suitable for accessing media (e.g., television and music programming, web pages, etc.) or interactive media guidance application features. User equipment 108 may be any type of user equipment (e.g., user television equipment, user computer equipment, WCD equipment, etc.) and, for simplicity, user equipment devices may be referred to generally as user equipment 108. Distribution facility 104 may also be connected to various home networks 113. Such home networks 113 may be located, for example, in homes of users or distributed, for example, among homes of users. Home networks 113 may each include a plurality of interconnected user equipment devices, such as, for example user equipment devices 108, 110 and 112.

User equipment devices 108, 110, and 112 may receive media (such as television, music, web pages, etc.) and other data from distribution facility 104 over communications paths, such as communications paths 114, 116, and 118, respectively. User equipment devices 108, 110, and 112 may also transmit signals to distribution facility 104 over paths 114, 116, and 118, respectively. Paths 114, 116, and 118 may be cables or other wired connections, free-space connections (e.g., for broadcast or other wireless signals), satellite links, or any other suitable link or combination of links.

Similarly, home network 113 may receive television and music programming and other data from distribution facility 104 over communications paths such as communications path 119. The user equipment located on home network 113 may access the received television and music programming and other data from distribution facility 104. Home network 113 may also transmit signals to distribution facility 104 over path 119. The transmitted signals may originate from user equipment located on home network 113. Path 119 may be directly connected to one of the user equipment devices located on home network 113 (e.g., a server or primary user equipment device) or any number of the user equipment devices located on home network 113. Path 119 may be cables or other wired connections, free-space connections (e.g., for broadcast or other wireless signals), satellite links, or any other suitable link or combination of links.

Data source 120 in system 100 may include a program listings database that is used to provide the user with television program-related information such as scheduled broadcast times, titles, channels, ratings information (e.g., parental ratings and critic's ratings), detailed title descriptions, genre or category information (e.g., sports, news, movies, etc.), program format (e.g., standard definition, high definition) and information on actors and actresses. Data source 120 may also be used to provide advertisements (e.g., program guide advertisements and advertisements for other interactive television applications), real-time data such as sports scores, stock quotes, news data, and weather data, application data for one or more media guidance applications or other interactive applications, and any other suitable data for use by system 100. As another example, data source 120 may provide data indicating the types of information that may be included in interactive media guidance overlays (e.g., at the request of the user, absent user modification, etc.).

There may be multiple data sources (such as data source 120) in system 100, although only one data source is shown in FIG. 1 to avoid overcomplicating the drawing. For example, a separate data source may be associated with each of a plurality of television broadcasters and may provide data that is specific to those broadcasters (e.g., advertisements for future programming of the broadcasters, logo data for displaying broadcasters' logos in program guide display screens, etc.). Data source 120 and any other system components of FIG. 1 may be provided using equipment at one or more locations. Systems components are drawn as single boxes in FIG. 1 to avoid overcomplicating the drawings.

In some embodiments of the present invention, data source 120 may provide data to distribution facility 104 over communications path 122 for distribution to the associated user equipment and home network over paths 114, 116, 118, and 119 (e.g., when data source 120 is located at a main facility). Communications path 122 may be any suitable communications path such as a satellite communications path or other wireless path, a fiber-optic or other wired communications path, a path that supports Internet communications, or other suitable path or combination of such paths.

In some embodiments of the present invention, data source 120 may provide data directly to user equipment 108 over path 124, communications network 126, and path 128 (e.g., when data source 120 is located at a facility such as one of programming sources 102). In some embodiments of the present invention, data source 120 may provide data directly to user equipment located on home network 113 over path 124, communications network 126, and path 139 (e.g., when data source 120 is located at a facility such as one of programming sources 102). Paths 124, 128, and 139 may be wired paths such as telephone lines, cable paths, fiber-optic paths, satellite paths, wireless paths, any other suitable paths or a combination of such paths. Communications network 126 may be any suitable communications network, such as the Internet, the public switched telephone network, or a packet-based network.

A media guidance application may be provided to user equipment, including user equipment located on home network 113, using any suitable approach. For example, program schedule data and other data may be provided to the user equipment on a television channel sideband, in the vertical blanking interval of a television channel, using an in-band digital signal, using an out-of-band digital signal, or by any other suitable data transmission technique. Program schedule data and other data may be provided to user equipment on multiple analog or digital television channels. Program schedule data and other data may be provided to the user equipment with any suitable frequency (e.g., continuously, daily, in response to a request from user equipment, etc.).

User equipment devices, including user equipment devices located on home network 113, such as user television equipment and personal computers, may use the program schedule data and other interactive media guidance application data to display program listings and other information (e.g., information on digital music) for the user. An interactive television program guide application or other suitable interactive media guidance application may be used to display the information on the user's display (e.g., in one or more overlays that are displayed on top of video for a given television channel). Interactive displays may be generated and displayed for the user using any suitable approach. In one suitable approach, distribution facility 104, or other facility, may generate application display screens and may transmit the display screens to user equipment for display.

In another suitable approach, user equipment may store data for use in one or more interactive displays (e.g., program schedule data, advertisements, logos, etc.), and an interactive media guidance application implemented at least partially on the user equipment may generate the interactive displays based on instructions received from distribution facility 104 or other facility. In some embodiments of the present invention, user equipment may store only the data that is used to generate the interactive television displays (e.g., storing logo data for a particular television broadcaster only if the logo is to be included in one or more interactive television displays). In some embodiments of the present invention, user equipment may store data that is not necessarily used to generate the interactive television displays (e.g., storing advertisements associated with a particular television broadcaster that may or may not be displayed depending on, for example, the outcome of negotiations with the television broadcaster). Any other suitable approach or combination of approaches may be used to generate and display interactive overlays for the user.

An on-line interactive media guidance application, such as an online interactive television program guide, and other interactive media guidance services may be provided using a server connected to communications network 126 such as server 130. Server 130 may receive program schedule data and other data from data source 120 via communications path 124, communications network 126, and communications path 132 or via another suitable path or combination of paths. Path 132 may be a satellite path, fiber-optic path, wired path, or any other path or combination of paths.

User equipment 108 may access the on-line interactive media guidance application and other sources from server 130 via communications path 128. User equipment 108 may also access the application and other services on server 130 via communications path 114, distribution facility 104, and communications path 134. For example, a cable modem or other suitable equipment may be used by user equipment 108 to communicate with distribution facility 104. Distribution facility 104 may communicate with communications network 126 over any suitable path 134, such as a wired path, a cable path, fiber-optic path, satellite path, or combination of such paths.

User equipment such as user television equipment 110, user computer equipment 112, and user equipment located on home network 113 may access the on-line interactive media guidance application and server 130 using similar arrangements. User television equipment 110 may access the on-line interactive media guidance application and server 130 using communications path 136 or using path 116, distribution facility 104, and path 134. User computer equipment 112 may access the on-line interactive media guidance application and server 130 using communications path 138 or using path 118, distribution facility 104, and path 134. User equipment located on home network 113 may access the on-line media guidance application and server 130 using communications path 139 or using path 119, distribution facility 104, and path 134. Paths 136, 138, and 139 may be any suitable paths such as wired paths, cable paths, fiber-optic paths, wireless paths, satellite paths, or a combination of such paths.

Interactive media guidance functions and the functions of other interactive applications may be supported using server 130 and other servers connected to communications network 126 such as server 140. Interactive applications may also be supported by servers or other suitable equipment at one or more service providers such as service provider 142. For example, an interactive application such as a home shopping service may be supported by a service provider such as service provider 142 that has sales representatives, order fulfillment facilities, account maintenance facilities, and other equipment for supporting interactive home shopping features. A home shopping application that is implemented using the user equipment may be used to access the service provider to provide such features to the user. The user equipment may access service provider 142 via distribution facility 104 and communications path 144 or via communications network 126 and communications path 146. Communications paths such as paths 144 and 146 may be any suitable paths such as wired paths, cable paths, fiber-optic paths, satellite paths, or a combination of such paths.

Another example of an interactive application is a home banking application. A home banking service may be supported using personnel at facilities such as service provider 142. An interactive home banking application that is implemented using the user equipment may access the home banking service via distribution facility 104 and communications path 144 or via communications network 126 and communications path 146.

If desired, an interactive media guidance application such as a network-based video recorder or a video-on-demand application may be supported using server 140, server 130, or equipment at service provider 142. Video-on-demand content and video recorded using a network-based video recorder arrangement may be stored on server 140 or server 130 or at service provider 142 and may be provided to the user equipment when requested by users. An interactive television program guide, for example, may be used to support the functions of a digital video recorder (sometimes called a personal video recorder) that is implemented using user equipment 108. Illustrative equipment that may be used to support digital video recorder functions include specialized digital video recorder devices, integrated receiver decoders (IRDs), set-top boxes with integrated or external hard drives, or personal computers with video recording capabilities.

If desired, interactive applications such as media guidance applications (e.g., interactive television program guide applications and video-on-demand applications), home shopping applications, home banking applications, game applications, and other applications (e.g., applications related to e-mail and chat or other communications functions, etc.) may be provided as separate applications that are accessed through a navigation shell application (i.e., a menu application with menu options corresponding to the applications). The features of such applications may be combined. For example, games, video-on-demand services, home shopping services, network-based video recorder functions, digital video recorder functions, navigational functions, program guide functions, communications functions, and other suitable functions may be provided using one application or any other suitable number of applications. The one or more applications may display various overlays on user equipment including, for example, interactive television information on top of video for a given television channel.

Interactive television program guide applications, home banking applications, home shopping applications, network-based video recorder and digital video recorder applications, video-on-demand applications, gaming applications, communications applications, and navigational applications are only a few illustrative examples of the types of interactive media guidance and other applications that may be supported by system 100. Other suitable interactive applications that may be supported include news services, web browsing and other Internet services, and interactive wagering services (e.g., for wagering on horse races, sporting events, and the like). Interactive television overlays that are displayed by these applications may also be customized in accordance with the present invention.

The interactive applications that are used in interactive media guidance system 100 may be implemented locally on the user equipment. The applications may also be implemented in a distributed fashion (e.g., using a client-server architecture in which the user equipment serves at least partly, and for at least some of the time, as the client and a server, such as server 140 at distribution facility 104, server 130, or other suitable equipment acts as the server). Other distributed architectures may also be used if desired. Moreover, some or all of the features of the interactive applications of system 100 may be provided using operating system software or middleware software. Such operating system software and middleware may be used instead of or in combination with application-level software. Regardless of the particular arrangement used to implement interactive features related to, for example, program guides, home shopping, home banking, video-on-demand, Internet, and communications, the software that supports these features may be referred to as an application or applications. The interactive media guidance system 100 also includes a clearinghouse 150 which is connected to the communications network 126 via communications link 148. The operation of clearinghouse 150 is discussed in further detail later herein.

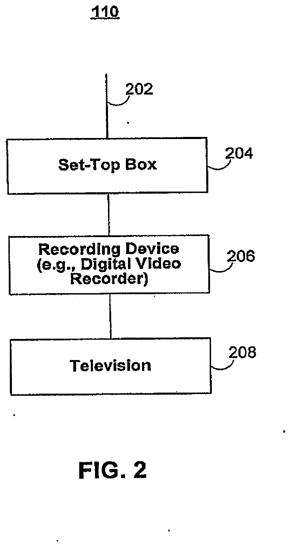

Illustrative user television equipment 110 (FIG. 1) that is based on a set-top box arrangement is shown in FIG. 2. User television equipment 110 may be stand-alone or a part of home network 113 (FIG. 1). Input/output 202 may be connected to communications paths such as paths 116 and 136 (FIG. 1). Input/output functions may be provided by one or more wires or communications paths, but are shown as a single path in FIG. 2 to avoid overcomplicating the drawing. Television programming, program guide data, and any other suitable interactive media guidance application data or other data may be received using input/output 202. Commands and requests and other data generated as a result of user interactions with the interactive media guidance application may also be transmitted over input/output 202.

Set-top box 204 may be any suitable analog or digital set-top box (e.g., a cable set-top box). Set-top box 204 may contain an analog tuner for tuning to a desired analog television channel (e.g., a channel comprising television programming, interactive television data, or both). Set-top box 204 may also contain digital decoding circuitry for receiving digital television channels (e.g., channels comprising television or music programming, interactive television data, etc.). Set-top box 204 may also contain a high-definition television tuner for receiving and processing high-definition television channels. Analog, digital, and high-definition channels may be handled together if desired. Multiple tuners may be provided (e.g., to handle simultaneous watch and record functions or picture-in-picture (PIP) functions). Box 204 may be an integrated receiver decoder (IRD) that handles satellite television. If desired, box 204 may have circuitry for handling cable, over-the-air broadcast, and satellite content.

Set-top box 204 may be configured to output media, such as television programs, in a preferred format. Because television programs may be received in a variety of formats, set-top box 204 may contain scaler circuitry for upconverting and downconverting television programs into the preferred output format used by set-top box 204. For example, set-top box 204 may be configured to output television programs in 720p. In this example, the scaler circuitry may upconvert standard-definition television programs having 480 lines of vertical resolution to 720p format and downconvert certain high-definition television programs having 1080 lines of vertical resolution to 720p format.

Box 204 may include a storage device (e.g., a digital storage device such as a hard disk drive) for providing recording capabilities. Box 204 may also be connected to a recording device 206 such as a video cassette recorder, digital video recorder, optical disc recorder, or other device or devices with storage capabilities. In some embodiments, box 204 may be configured to record either standard-definition television programs or high-definition television programs. In some embodiments, box 204 may be configured to record both standard-definition television programs and high-definition television programs.

Set-top box 204 contains a processor (e.g., a microcontroller or microprocessor or the like) that is used to execute software applications. Set-top box 204 may contain memory such as random-access memory for use when executing applications. Nonvolatile memory may also be used (e.g., to launch a boot-up routine and other instructions). Hard disk storage in box 204 or in recording device 206 may be used to back up data and to otherwise support larger databases and storage requirements than may be supported using random-access memory approaches. Hard disk storage in box 204 or in recording device 206 may also be used to store and back up program guide settings or saved user preferences.

Set-top box 204 may have infrared (IR) or other communications circuitry for communicating with a remote control or wireless keyboard. Set-top box 204 may also have dedicated buttons and a front-panel display. The front-panel display may, for example, be used to display the current channel to which the set-top box is tuned.

Set-top box 204 may also have communications circuitry such as a cable modem, an integrated services digital network (ISDN) modem, a digital subscriber line (DSL) modem, a telephone modem, or a wireless modem for communications with other equipment. Such communications may involve the Internet or any other suitable communications networks or paths. If desired, the components of set-top box 204 may be integrated into other user equipment (e.g., a television or videocassette recorder).

Recording device 206 may be used to record videos provided by set-top box 204. For example, if set-top box 204 is tuned to a given television channel, the video signal for that television channel may be passed to recording device 206 for recording on a videocassette, compact disc, digital video disk, or internal hard drive or other storage device. In some embodiments, recording device 206 may be configured to record either standard-definition television programs or high-definition television programs. In some embodiments, recording device 206 may be configured to record both standard-definition television programs and high-definition television programs. Recording device 206 may have communications circuitry such as a cable modem, an ISDN modem, a DSL modem, or a telephone modem for communications with other equipment. Such communications may involve the Internet or any other suitable communications networks or paths. The components of recording device 206 may be integrated into other user equipment (e.g., a television, stereo equipment, etc.).

Recording device 206 may be controlled using a remote control or other suitable user interface. If desired, video recorder functions such as start, stop, record and other functions for device 206 may be controlled by set-top box 204. For example, set-top box 204 may control recording device 206 using infrared commands directed toward the remote control inputs of recording device 206 or set-top box 204 may control recording device 206 using other wired or wireless communications paths between box 204 and device 206.

The output of recording device 206 may be provided to television 208 for display to the user. In some embodiments, television 208 may be capable of displaying high-definition programming (i.e., HDTV-capable). If desired, multiple recording devices 206 or no recording device 206 may be used. If recording device 206 is not present or is not being actively used, the video signals from set-top box 204 may be provided directly to television 208. Any suitable television or monitor may be used to display the video. For example, if the video is in a high-definition format, an HDTV-capable television or monitor is required to display the video. In the equipment of FIG. 2 and the other equipment of system 100 (FIG. 1), the audio associated with various video items is typically distributed with those video items and is generally played back to the user as the videos are played. In some embodiments, the audio may be distributed to a receiver (not shown), which processes and outputs the audio via external speakers (not shown).

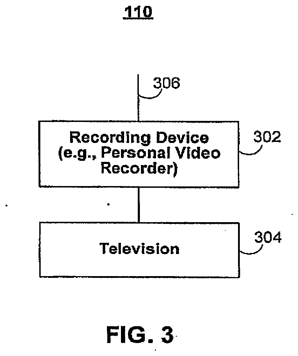

Another illustrative arrangement for user television equipment 110 (FIG. 1) is shown in FIG. 3. User television equipment 110 may be stand-alone or a part of home network 113 (FIG. 1). In the example of FIG. 3, user television equipment 110 includes a recording device 302 such as a digital video recorder (e.g., a digital video recorder (DVR)) that uses a hard disk or other storage for recording video. Recording device 302 may alternatively be a digital video disc recorder, compact disc recorder, videocassette recorder, or other suitable recording device. Equipment 1 10 of FIG. 3 may also include a television 304. In some embodiments, television 304 may be HDT V-capable. Input/output 306 may be connected to communications paths such as paths 116 and 136 (FIG. 1). Television programming, program schedule data, and other data (e.g., advertisement data, data indicating one or more television channels for which the display of an overlay is to be customized, etc.) may be received using input/output 306. Commands and requests and other data from the user may be transmitted over input/output 306.

Recording device 302 may contain at least one analog tuner for tuning to a desired analog television channel (e.g., to display video for a given television channel to a user, to receive program guide data and other data) and multiple other tuners may also be provided. Recording device 302 may also contain digital decoding circuitry for receiving digital television programming, music programming, program guide data, and other data on one or more digital channels. Recording device 302 may also contain circuitry for receiving high-definition television channels. If desired, recording device 302 may contain circuitry for handling analog, digital, and high-definition channels. Recording device 302 also contains a processor (e.g., a microcontroller or microprocessor or the like) that is used to execute software applications. Recording device 302 may contain memory such as random-access memory for use when executing applications. Nonvolatile memory may also be used to store a boot-up routine or other instructions. The hard disk and other storage in recording device 302 may be used to support databases (e.g., program guide databases or other interactive television application databases). The hard disk or other storage in recording device 302 may also be used to record video such as television programs or video-on-demand content or other content provided to recording device 302 over input/output 306.

Recording device 302 may have IR communications circuitry or other suitable communications circuitry for communicating with a remote control. Recording device 302 may also have dedicated buttons and a front-panel display. The front-panel display may, for example, be used to display the current channel to which the recording device is tuned.

Recording device 302 may also have communications circuitry such as a cable modem, an ISDN modem, a DSL modem, a telephone modem, or a wireless modem for communications with other equipment. Such communications may involve the Internet or other suitable communications networks or paths.

If desired, recording device 302 may include a satellite receiver or other equipment that has wireless communications circuitry for receiving satellite signals.

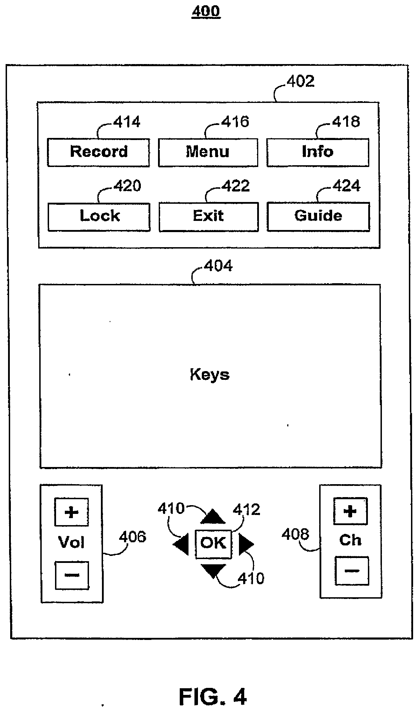

Recording device 302 of FIG. 3 or recording device 206 of FIG. 2 may record new video while previously recorded video is being played back on television 304 or 208. This allows users to press a pause button during normal television viewing. When the pause button is pressed, the current television program is stored on the hard disk of digital video recorder 302. When the user presses play, the recorded video may be played back. This arrangement allows the user to seamlessly pause and resume television viewing. Recording devices 302 and 206 may also be used to allow a user to watch a previously-recorded program while simultaneously recording a new program. The wireless communications device (WCD) 152 may enable a media content user and/or subscriber to control the delivery of media content to user equipment via a wireless interface and/or wireless network. The WCD 152 may function as a remote control 400 (FIG. 4) for one or more user equipment devices 108, user television equipment devices 110, user computer equipment devices 112, or any other user media device. In certain embodiments, the WCD 152, functioning as the remote control 400, includes a display, while in other embodiments, the WCD 152 does not include a display. Further details regarding the features and/or capabilities of a WCD 152 are provided in co-pending U.S. Patent Application No. 11/403,709 , entitled "Interactive Media Content Delivery Using Enhanced Wireless Back Channel Communications," having Attorney Docket No. UV-307A.

The set-top box arrangement of FIG. 2 and the digital video recorder with a built-in set-top box arrangement of FIG. 3 are merely illustrative. Other arrangements may be used if desired. For example, user television equipment may be based on a WebTV box, a personal computer television (PC/TV), or any other suitable television equipment arrangement. If desired, the functions of components such as set-top box 204, recording device 302, a WebTV box, or PC/TV or the like may be integrated into a television or personal computer or other suitable device.

An illustrative remote control 400 for operating user television equipment 110 (FIG. 1 ) or suitable user computer equipment 112 is shown in FIG. 4 . Remote control 400 is only illustrative and any other suitable user input interface may be used to operate user equipment (e.g., a mouse, trackball, keypad, keyboard, touch screen, voice recognition system, etc.). Remote control 400 may have function keys 402 and other keys 404 such as keypad keys, power on/off keys, pause, stop, fast-forward and reverse keys. Volume up and down keys 406 may be used for adjusting the volume of the audio portion of a video. Channel up and down keys 408 may be used to change television channels and to access content on virtual channels. Cursor keys 410 may be used to navigate on-screen menus. For example, cursor keys 410 may be used to position an on-screen cursor, indicator, or highlight (sometimes all generically referred to herein as a highlight or highlight region) to indicate interest in a particular option or other item on a display screen that is displayed by the interactive television application.

In one embodiment, the remote control 400 includes the functionality of and/or operates as a WCD 152. Further details regarding the features and/or capabilities of a WCD 152 are provided in co-pending U.S. Patent Application No. 11/403,709 , entitled "Interactive Media Content Delivery Using Enhanced Wireless Back Channel Communications," having Attorney Docket No. UV-307A. The OK key 412 (sometimes called a select or enter key) may be used to select on-screen options that the user has highlighted.

Keys 402 may include RECORD key 414 for initiating recordings. MENU button 416 may be used to direct an interactive media guidance application to display a menu on the user's display screen (e.g., on television 208 or 304 or on a suitable monitor or computer display). INFO button 418 may be used to direct an interactive media guidance application to display an information display screen. For example, when a user presses INFO key 418 while video for a given television channel is displayed for the user, an interactive television program guide may display a FLIP/BROWSE overlay including program schedule information for the current program on the given television channel on top of the video. As another example, when a particular program listing in an interactive television program listings display screen is highlighted, the user pressing INFO button 418 may cause an interactive television program guide to provide additional program information associated with that program listing (e.g., a program description, actor information, schedule information, etc.).

LOCK button 420 may be used to modify access privileges. For example, a parent may use LOCK button 420 or on-screen options to establish parental control settings for the interactive media guidance application. The parental control settings may be time-based settings (e.g., to prevent a child from watching television during a particular time block, such as from 3:00 PM to 5:00 PM). The parental control settings may also be used to, for example, block programming based on rating, channel, and program title. A locked or blocked program (or other media) is typically not viewable until the interactive media guidance application is provided with a suitable personal identification number (PIN). Once this PIN has been entered, the interactive media guidance application will unlock the user's equipment and allow the locked content to be accessed.

EXIT button 422 may be used to exit the interactive media guidance application or to exit a portion of the interactive media guidance application (e.g., to cause an interactive television program guide to remove a FLIP, BROWSE, or other interactive television overlay from the display screen). GUIDE button 424 may be used to invoke an interactive television program guide (e.g., a program guide menu screen, program listings screen, or other program guide screen).

The keys shown in FIG. 4 are merely illustrative. Other keys or buttons may be provided if desired. For example, a music button may be used to access music with the interactive media guidance application. An edit button may be used to edit stored content (e.g., to remove commercials, remove portions of a video, etc.). Alphanumeric buttons may be used to enter alphanumeric characters. A last or back button may be used to browse backward in the interactive media guidance application (e.g., to return to a previous channel, web page, or other display screen). Video recorder function buttons such as a play button, pause button, stop button, rewind button, fast-forward button, and record button, may be used to control video recorder functions (local or network-based) in system 100 (FIG. 1). A help key may be used to invoke help functions such as context-sensitive on-screen help functions.

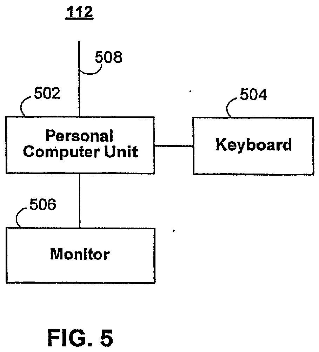

Illustrative user computer equipment 112 (FIG. 1) is shown in FIG. 5. User computer equipment 112 may be stand-alone or a part of home network 113 (FIG. 1). In the arrangement of FIG. 5, personal computer unit 502 may be controlled by the user using keyboard 504 and/or other suitable user input device such as a trackball, mouse, touch pad, touch screen, voice recognition system, or a remote control, such as remote control 400 of FIG. 4. Video content such as television programming and interactive media guidance application display screens may be displayed on monitor 506. Television and music programming, media guidance application data (e.g., television program guide data), video-on-demand content, video recordings played back from a network-based video recorder, and other data may be received from paths 118 and 138 (FIG. 1) using input/output 508. User commands and other information generated as a result of user interactions with the interactive media guidance application and system 100 (FIG. 1) may also be transmitted over input/output 508.

Personal computer unit 502 may contain a television or video card, such as a television tuner card, for decoding analog, digital, and high-definition television channels and for handling streaming video content. Multiple video cards (e.g., tuner cards) may be provided if desired. An illustrative television tuner card that may be used may contain an analog television tuner for tuning to a given analog channel, digital decoding circuitry for filtering out a desired digital television or music channel from a packetized digital data stream, and a high-definition television tuner for tuning to a high-definition channel. Any suitable card or components in computer unit 502 may be used to handle video and other content delivered via input/output line 508 if desired.

Personal computer unit 502 may contain one or more processors (e.g., microprocessors) that are used to run the interactive media guidance application or a portion of the interactive media guidance application.

Personal computer unit 502 may include a hard drive, a recordable DVD drive, a recordable CD drive, or other suitable storage device or devices that store video, program guide data, and other content. The interactive media guidance application and personal computer unit 502 may use a storage device or devices to, for example, provide the functions of a personal video recorder.

User equipment, such as user equipment 108, user television equipment 110, user computer equipment 112, and user equipment located on home network 113 (FIG. 1), may be used with network equipment such as server 130, server 140, and equipment at service providers such as service provider 142 of FIG. 1 to provide network-based video recording functions. Video recording functions may be provided by storing copies of television programs and other video content on a remote server (e.g., server 130 or server 140) or other network-based equipment, such as equipment at a service provider such as service provider 142.

Video recordings may be made in response to user commands that are entered at user equipment 108 or user equipment located on home network 113 (FIG. 1). In a digital video recorder arrangement, the interactive media guidance application may be used to record video locally on the user equipment in response to the user commands. In a network-based video recorder arrangement, the interactive media guidance application may be used to record video or to make virtual recordings (described below) on network equipment such as server 130, server 140, or equipment at service provider 142 in response to the user commands. The user commands may be provided to the network equipment over the communications paths shown in FIG. 1. The digital video recorder arrangement and the network-based video recorder arrangement can support functions such as fast-forward, rewind, pause, play, and record.

To avoid unnecessary duplication in a network-based video recorder environment, system 100 may provide network-based video recording capabilities by using virtual copies or recordings. With this approach, each user may be provided with a personal area on the network that contains a list of that user's recordings. The video content need only be stored once (or a relatively small number of times) on the network equipment, even though a large number of users may have that video content listed as one of their recordings in their network-based video recorder personal area. Personal settings or any other suitable data may be stored in a user's personal area on the network.

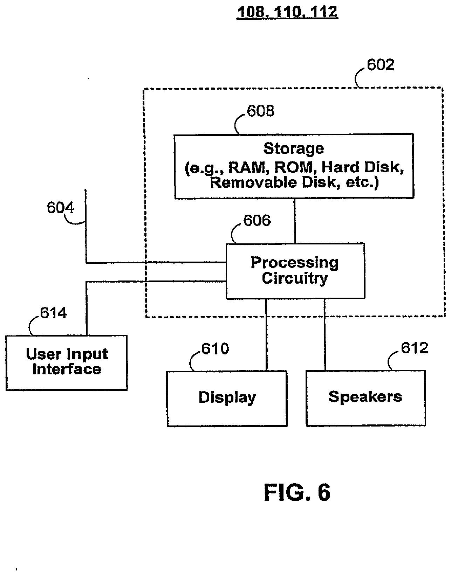

The user television equipment and user computer equipment arrangements described above are merely illustrative. A more generalized embodiment of illustrative user equipment 108, 110, and 112 (FIG. 1) and user equipment located on home network 113 (FIG. 1) is shown in FIG. 6. Control circuitry 602 is connected to input/output 604. Input/output 604 may be connected to one or more communications paths such as paths 114, 116, 118, 128, 136, and 138 of FIG. 1. Media (e.g., television programming, music programming and web pages) may be received via input/output 604 (e.g., from programming sources 102, servers or other equipment, such as server 130, service providers such as service provider 142, distribution facility 104, etc.). Interactive media guidance application data, such as program schedule information for an interactive television program guide, may be received from data source 120 via input/output 604. Input/output 604 may also be used to receive data from data source 120 for other interactive television applications. The user may use control circuitry 602 to send and receive commands, requests, and other suitable data using input/output 604.

Control circuitry 602 may be based on any suitable processing circuitry 606 such as processing circuitry based on one or more microprocessors, microcontrollers, digital signal processors, programmable logic devices, etc. In some embodiments, control circuitry 602 executes instructions for an interactive media guidance application or other interactive application (e.g., web browser) from memory. Memory (e.g., random-access memory and read-only memory), hard drives, optical drives, or any other suitable memory or storage devices may be provided as storage 608 that is part of control circuitry 602. Tuning circuitry such as one or more analog tuners, one or more MPEG-2 decoders or other digital video circuitry, high-definition tuners, or any other suitable tuning or video circuits or combinations of such circuits may also be included as part of circuitry 602. Encoding circuitry (e.g., for converting over-the-air, analog, or digital signals to MPEG signals for storage) may also be provided. The tuning and encoding circuitry may be used by the user equipment to receive and display, play, or record a particular television or music channel or other desired audio and video content (e.g., video-on-demand content or requested network-based or local video recorder playback). Television programming and other video and on-screen options and information may be displayed on display 610. Display 610 may be a monitor, a television, or any other suitable equipment for displaying visual images. In some embodiments, display 610 may be HDTV-capable. Speakers 612 may be provided as part of a television or may be stand-alone units. Digital music and the audio component of videos displayed on display 610 may be played through speakers 612. In some embodiments, the audio may be distributed to a receiver (not shown), which processes and outputs the audio via speakers 612.

A user may control the control circuitry 602 using user input interface 614. User input interface 614 may be any suitable user interface, such as a mouse, trackball, keypad, keyboard, touch screen, touch pad, voice recognition interface, or a remote control. The generalized description of the computer system depicted in FIG. 6 is exemplary of any general purpose computer system. To the extent that other elements of the media guidance system 100 utilize a computer system, the computer system components of FIG. 6 may be considered exemplary of the computer and/or communications systems components utilized by, for example, the clearinghouse 150, server 130, server 140, distribution facility 104, data source 120, and like information servers.

Referring to FIG. 1, in one embodiment, the interactive media guidance system 100 includes at least one media content source. The media content source may include, without limitation, data source 120, programming sources 102, service provider 142, and server 130. Each media content source may be configured to store certain media content. The media content may include a media program, a media program listing, a media program schedule, media content metadata, a user equipment device application, and/or a user equipment device application update. The media content metadata includes any data related to and/or descriptive of the media content. For example, the media content may include user comments, ratings, and/or recommendations related to certain media content. The metadata may include information identifying certain segments of media content that enable an IPG and/or user to select certain portions of a media program for viewing and/or recording. The metadata may include, without limitation, configuration, access control, copy control, and/or parental control information.

In certain embodiments, the interactive media guidance system 100 includes a user equipment device such as, for example, user equipment 108, user television equipment 110, and user computer equipment 112. The user equipment 108, in one embodiment, is configured to send a media control message to a destination such as, for example, the clearinghouse server 150, the server 130, and/or distribution facility 104. The user equipment 108 is also capable, for example, of receiving the media content from a distribution facility 104.

In one embodiment, the interactive media guidance system 100 includes at least one distribution facility 104 of a plurality of distribution facilities 104. The distribution facility 104, in certain embodiments, is configured for receiving a media control message from the clearinghouse 150. In response to the media control message, the distribution facility 104 retrieves the requested and/or ordered media content from at least one media content source such as the data source 120, service provider 142, server 130, and/or programming source 102. Once the media content, e.g., a movie, is retrieved, the distribution facility can send the media content to at least one user equipment device 108.

In one embodiment, a clearinghouse 150 is capable of communications with at least one of the media content sources 120, 142, 102, and 130 and at least one distribution facility 104. The clearinghouse may be configured for and/or capable of receiving a media control message from the user equipment device 108. In certain embodiments, the clearinghouse processes each media control message. The processing may include, without limitation, converting a media control message from one information format to another information format. The clearinghouse, in certain embodiments, is configured for and/or capable of sending a media control message to at least one distribution facility 104. The media control information may include, without limitation, an order for a media program order, a media program listing, a media program schedule, a user equipment device application, media content metadata, and/or a user equipment device application update.

In one embodiment, the information format of a message includes the message structure, arrangement, protocol, connection state (e.g., connection oriented or connectionless), encoding, ISO layer location and/or use, header content, and like message characteristics. For example, one format may include a markup language such as Hypertext Markup Language (HTML), Standard Generalized Markup Language (SGML), Extensible Markup Language (XML), and/or Wireless Markup Language (WML). The information format may include, without limitation, an Internet Protocol (IP) packet, electronic mail (e-mail) message, flat file, data file, instant message, connection-oriented data stream, and/or circuit-switched information connection.

In one embodiment, the clearinghouse 150 includes a computer system running a network server application capable of communications with any one of a plurality of servers connected to the communications network 126. The clearinghouse 150, like other network communications servers, includes at least one transceiver to support input and output communication like, for example, the input/output 604 of FIG. 6. In certain embodiments, the clearinghouse 150 includes the components of a general purpose computer system like the computer system shown in FIG. 6 related to user equipment devices 108, 110, and 112.

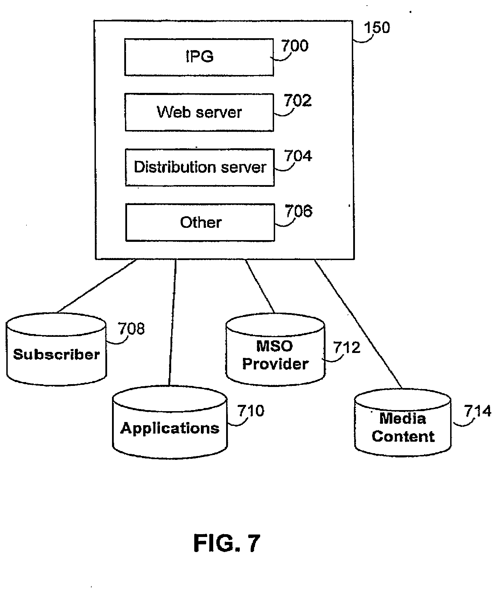

FIG. 7 is a functional block diagram showing various applications within a clearinghouse 150 according to an illustrative embodiment of the invention. The clearinghouse 150 includes IPG application 700, Web server application 702, distribution server application 704, and other applications 706. The clearinghouse server also includes, without limitation, subscriber database 708, applications database 710, MSO provider database 712, and media content database 714. The media content database 714 may include, for example, media programs and/or media content metadata.

The IPG application 700 may allow users to remotely access television program listings in different display formats. For example, a user may desire to view a grid of program listings organized in a channel-ordered list. Alternatively, the user may desire to view program listings organized by time, by theme (movies, sports, etc.), or by title (i.e., alphabetically ordered). Because the clearinghouse 150 provides a backchannel communication link via the communications network 126 which enables two-way communications between a user equipment device 108 and the MSO network distribution facility 104, users may interactively select "video on demand" (VOD) and "pay per view" (PPV) media content directly with the IPG 700 using their remote control unit or a suitable input device for viewing or recording.

In one embodiment, the clearinghouse 150 includes publicly and/or Internet accessible web server application 702 and/or website. The clearinghouse 150 may be remotely located from the location of other servers and the distribution facilities 104. The clearinghouse 150 may be operated and/or controlled by a third party other than an MSO network provider and media content user.

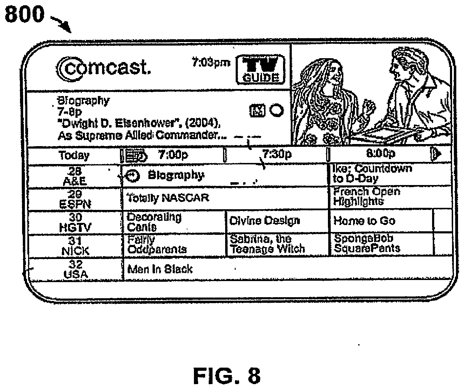

FIG. 8 includes an exemplary view 800 of the display of information provided to a user equipment device 108 by the IPG 700 of the clearinghouse 150 according to an illustrative embodiment of the invention.

In one embodiment, the clearinghouse 150 includes a web server application 702. The web server application 702 may include, for example, some or all of the capabilities of the IPG application 700. To access the web server application 702, a user equipment device 108 may include a web browser application. The clearinghouse 150 may include a distribution server application 704 that is capable of distributing media content or media applications to user equipment devices 108 and/or other information servers such as server 120, service provider 142, data source 120, programming source 102, server 140, and/or the distribution facilities 104.

For example, during an initial registration of a user equipment device 108 with the clearinghouse 150, the clearinghouse 150 may determine that the user equipment device 108 needs a particular IPG application, IPG interface to the IPG 700, or some other application to enable the user equipment device 108 to send a control message to and/or receive media content from a distribution facility 104 or other media content source. Thus, the clearinghouse 150 may download the application and/or make the application available for downloading to the user equipment device 108. In certain embodiments, other applications 706 may perform validation, authorization, authentication, and other processes of the clearinghouse server 150.

The clearinghouse 150, in one embodiment, is capable of determining which distribution facility 104 of a plurality of distribution facilities 104 to send the media control message. The clearinghouse 150 may determine the destination distribution facility 104 by examining the location information of the user equipment device that originated the media control message and/or destination information of the media control message.

The clearinghouse 150 may validate, authorize, and/or authenticate the identity of a user equipment device 108. The IPG application 700 and/or another application 706 may perform the validation, authorization, and/or authentication process. In one embodiment, the clearinghouse 150 includes a subscriber database 708 having a list of authorized user equipment devices 108 and associated identifiers. The clearinghouse 150 may compare a user equipment device 108 identifier included in the media control message with the list in subscriber database 708 to determine whether the media control message from the user equipment device 108 should be further processed or discarded. The media control message may include an MSO network identifier which may be compared with a list of MSO network identifiers in the database 712.

The media control message may include a user password, passcode, cryptographic checksum, and/or message authentication code (cryptographic MAC) that enables the clearinghouse 150 to authenticate the media control message, user equipment device 108, and/or user. Other subscriber-related information may be employed to authorize the further processing of a media control message. In one embodiment, the clearinghouse 150 determines whether certain user equipment devices 108 are authorized to send media control messages by examining location information associated with a media control message such as, without limitation, the IP address, media access control (MAC) address, user equipment device serial number, user subscription identifier, and any other like device 108 and/or user identifier.

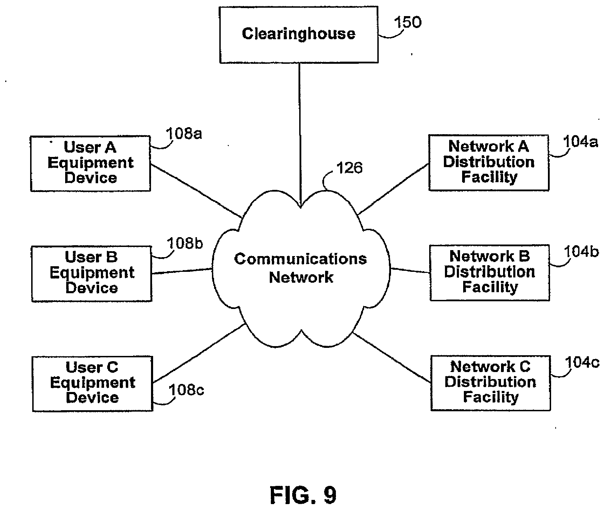

FIG. 9 is a conceptual block diagram of an interactive media guidance system 800 including a clearinghouse 150 that facilitates the exchange of media control messages and media content between user equipment devices 108 and distribution facilities 104 according to an illustrative embodiment of the invention. One problem with current media guidance systems is that the distribution facilities 104 of one MSO network provider may interpret and/or utilize media control messages having a different information format than the information format interpreted and/or utilized by distribution facilities 104 of another MSO network provider. In certain embodiments, the functionality of the clearinghouse 150 may be incorporated into a distribution facility 104. In other embodiments, a clearinghouse 150 may not be required for the exchange of media control messages and media content between user equipment devices 108 and distribution facilities 104.

FIG. 9 includes multiple user equipment devices 108a, 108b, and 108c and so on along with multiple distribution facilities 104a, 104b, and 104c, and so on. Each user equipment device 104 may be associated with a particular MSO network provider. Each distribution facility 104 may be associated with a particular MSO network provider. In one embodiment, the clearinghouse 150 exchanges data and/or information between the user equipment devices 108 and the distribution facilities 104. The data and/or information may be included, without limitation, in a media control message, media content, network communications connection, and/or other information exchange mechanism via the communication network 126. In one embodiment, the clearinghouse 150 converts the data and/or information exchanged between a user equipment device 108 and a distribution facility 104 into the information format required by the destination user equipment device 108 and/or distribution facility 108.

In certain embodiments, the clearinghouse 150 is capable of interpreting and/or generating media control messages in any one of a plurality of information formats. The clearinghouse 150, in one embodiment, converts at least a portion of a media control message from a first information format into a second information format that corresponds to and/or can be interpreted by a selected destination distribution facility 104. Thus, the clearinghouse 150, in certain embodiments, advantageously enables a standard user equipment device 108 to communicate with any distribution facility 104, regardless of the information format required by that particular distribution facility 104. The clearinghouse 150, acting as an intermediate server, further establishes a backchannel communications path from a standard user equipment device 108 to any distribution facility 104.

In certain embodiments, the media guidance system may include at least one media information server such as server 130 and/or server 140. The media information server may act as an intermediary between the clearinghouse 150 and a distribution facility 104. Thus, the media information server may be configured to receive a media control message from the clearinghouse 150 and then send the media control message to a distribution facility 104.

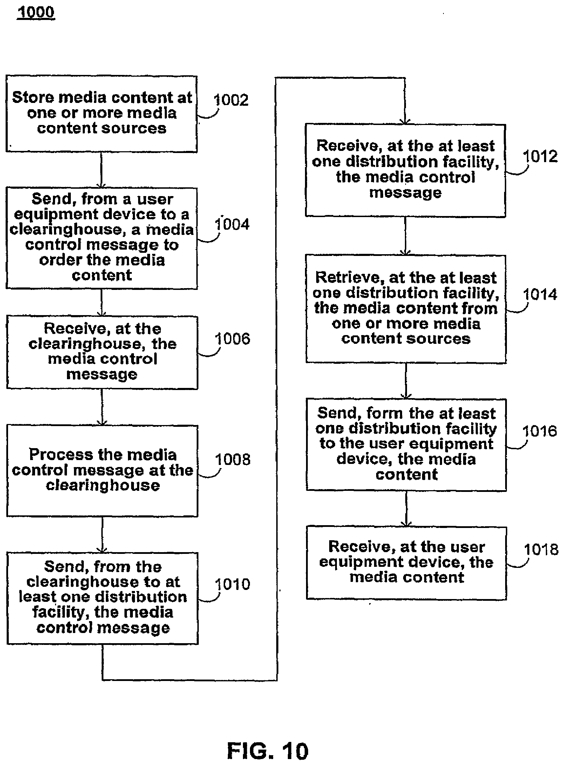

FIG. 10 is a flow diagram of a process 1000 for requesting media content information and/or services using a clearinghouse 150 within a media guidance system 100 according to an illustrative embodiment of the invention. First, certain media content, e.g., music, movies, TV programs, is stored at one or more media content sources (Step 1002). To order certain media content, a user equipment device 108 sends to the clearinghouse 150 a media control message (Step 1004). Upon receiving the media control message (Step 1006), the clearinghouse 150 processes the media control message (Step 1008). Once processed, the clearinghouse 150 sends the media control message to at least one distribution facility 104 of a plurality of distribution facilities 104 (Step 1010). After receiving the media control message at the distribution facility 104 (Step 1012), the distribution facility 104 retrieves the media content from one or more media content sources, e.g., data source 120 and/or programming sources 102 (Step 1014). Once retrieved, the distribution facility 104 sends the media content to the user equipment device 108 (Step 1016) whereupon the user equipment device 108 receives the media content (Step 1018). FIG. 10 is illustrative of "ordering" a program, but the media control message and/or media control information may be for VCR-style commands also, such as fast forward, rewind, pause, slow motion, and like commands.

In certain embodiments, the clearinghouse 150 may act as an agent or central repository of media content information for one or more MSO network providers using media content database 714. In one embodiment, the clearinghouse 150 performs the same functions as an IPG within, for example, server 140 with respect to providing media content listings and the capability for a user to designate certain programs for viewing and/or recording notifications. The clearinghouse 150 may maintain media content information locally and periodically interface with another media content source such as data source 120, programming source 102, and/or server provider 142 to update its media content information. The clearinghouse 150 may send and receive e-mail messages to interact with a user equipment device 108.

In other embodiments, to facilitate media content delivery to a user equipment device 108, the clearinghouse 150 may act as a proxy and relay messages between a user equipment device 108 and distribution facility 104. Alternatively, the clearinghouse 150 may send a message to the distribution facility 104 to initiate media content delivery at the particular time. The clearinghouse 150 may have the capability to convert standard e-mail messages or web-based commands into multiple proprietary command formats for multiple distribution facilities 104. These commands may be included in a media control message. Thus, in certain embodiments, the clearinghouse 150 enables end users to use a standard application such as SMS messaging and/or web browsing to control their media content delivery.

If an IPG application is not available within a user equipment device 108 initially, the user equipment device 108 may be capable of downloading the application from the clearinghouse 150 via links 128 and 138, and communications network 126. The IPG application 700, web server application 702, and/or other application 706 of the clearinghouse 150 may provide instructions regarding the downloading of an IPG application and/or other data to the user equipment device 108.

Alternatively, the distribution facility 104 may provide download instructions on a web server within the server 140. For example, a wireless capable user equipment device 108 or WCD 152 may initiate the downloading of a Brew^{®} IPG application. The download instructions may be tailored to specify the particular download code needed to obtain the proper IPG program for a particular clearinghouse 150 and/or particular distribution facility 104.

In another embodiment, the clearinghouse 150 includes a web server application 702 that provides the functionality of an IPG application 700 by presenting media content information to the user via a web browser application within a user equipment device 108. The presentation format of the web server 702 may be similar to the format used by an IPG within a user equipment device 108. Alternatively, the media content information may be formatted to leverage the multimedia capabilities of a web page based on HTML, XML, WML, or like markup language. The distribution application 704 may enable the downloading of, for example, Java^{™} or Brew^{®} applications, or some other application capable of execution in certain user equipment devices 108.

In one exemplary embodiment, a television set with an IPG, e.g., a media device, is bought at a store. However, there may be many different cable and satellite providers, e.g., media content sources, providing service across different geographical regions. It would be costly and possibly impractical to create an IPG that is capable of communicating with all of the different cable and satellite providers. However, one solution to this problem includes providing a central facility and/or clearinghouse 150, e.g., tvguide.com, with which the IPG application can communicate. The clearinghouse 150 acts as a liaison between the media device and a particular cable or satellite service provider that the end user has picked or been assigned. The clearinghouse 150 converts user commands issued to the IPG at the media device and then sent to the clearinghouse 150 into a format that is understandable by the particular media content source. The media content source may then control delivery of the media content based on the user command. The clearinghouse 150 may be located centrally, for example, at tvguide com and provide a solution to enable VOD and real-time VCR-type control to one-way media broadcast systems, such as over the air, satellite, or one-way cable (mainly, analog) broadcasts.

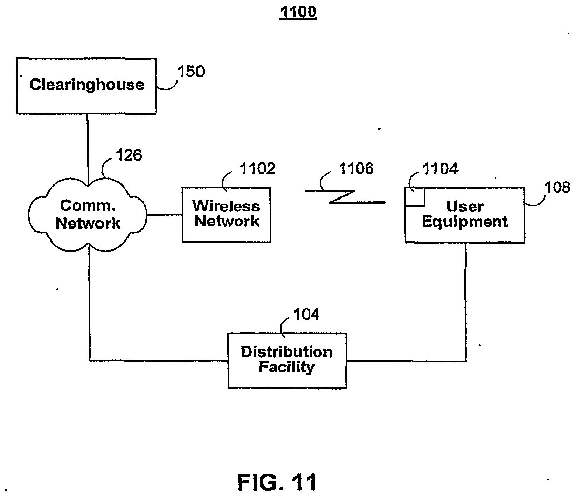

FIG. 11 is a block diagram of a media guidance system 1100 where a user equipment device 108 establishes back channel communications with a distribution facility 104 using a wireless communications network 1102 and clearinghouse server 150 according to an illustrative embodiment of the invention. In this embodiment, the user equipment device 108 includes a wireless transceiver 1104. Thus, the user equipment device 108 is capable of communicating with the clearinghouse 150 via the wireless communications network 1102 and communications network 126. In certain embodiments, the user equipment device 108 may utilize a wired connection to the communications network 126. The wired connection may be via a wired backchannel network such as a local area network.

In operation, the user equipment device 108 establishes a data communications link and/or channel with wireless access network 1102 via air interface 1106 to exchange information with the clearinghouse server 150. The wireless network 1102 or wireless backchannel network may be, without limitation, a public land mobile network (PLMN), a wireless local area network (WLAN), a personal area network (PAN), an ad hoc wireless network, and like wireless network. In one embodiment, the data channel and/or backchannel includes air interface 1106, wireless network 1102, and communication network 126. Once a data channel is established, the user equipment device 108 employs an internal IPG, web browser, and/or other application such as an email client to exchange media content, media control messages, and/or media information with the clearinghouse 150. The email client may be, without limitation, Eudora^{®} and Microsoft Outlook^{®}, and like email clients. The email client may be used to compose email messages that include text information or short message service (SMS) messages.

In certain embodiments, the user equipment device 108 interacts with the clearinghouse 150 which eliminates the need for an IPG that supports multiple, possibly proprietary, message and/or command formats that may be required by different distribution facilities 104. In turn, the clearinghouse 150 relays information to and from different distribution facilities 104 by converting one or more generic media control messages and/or common command formats into an information format used by each distribution facility of each cable TV and/or satellite provider.

The wireless network 1102 addresses a limitations with current media delivery systems, such as satellite media systems, by enabling the media guidance system 1100 to provide real-time or near real-time backchannel communications from a media device and/or user equipment device 108 to a distribution facility 104 of a satellite provider. Without such a backchannel, a satellite provider must rely on traditional PSTN telephone connections that may provide periodic backchannel communications, but not in real-time or near real-time. Real-time or near real-time backchannel communications provides true VOD features and VCR-like functionality to satellite and one-way cable services. In certain embodiments, the wireless network 1102 may be an existing home wireless local area network utilizing, for example, 802.11b WiFi access point which a user equipment device may automatically detect and connect to.

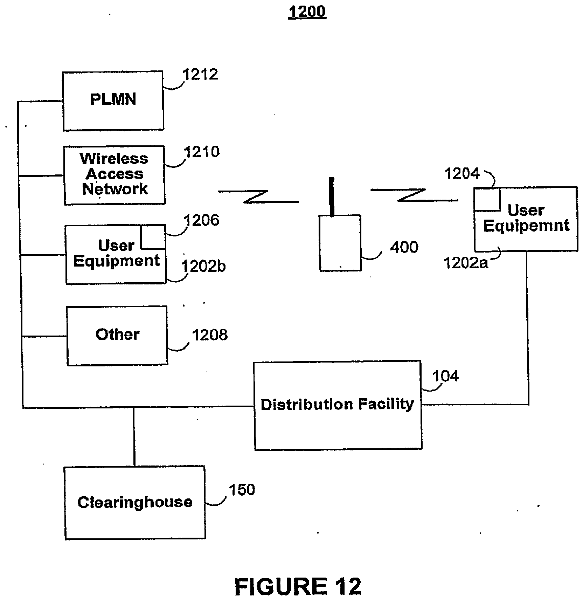

FIG. 12 is a block diagram of a media delivery system 1200 using a remote control device 400 to establish a second data channel that facilitates back channel communications from a user equipment device 1102 to a media content distribution facility 104 according to an illustrative embodiment of the invention. In one embodiment, the remote control device 400 includes the wireless communications capabilities of a WCD 15.2. In certain embodiments, the remote control 400 includes a display. In other embodiments, the remote control 400 does not include a display. The remote control 400 may establish a wireless data link with a user media device and/or user equipment device 1202. The wireless data link may include any one of an IR interface, Bluetooth interface, 802.11 interface, WiFi interface, wired LAN interface, or any like wired or wireless interface. The remote control 400 may also establish a link with any one of a public land mobile network (PLMN) 1212, a wireless access network 1210, a user equipment device 1202b via the transceiver 1206, or some other wireless network 1208. The remote control 400 further may not necessarily have a communications link with the user equipment device 1202 and/or media device other than a user command input interface.

The user equipment and/or media device 1202 (1202a and 1202b) may include, without limitation, a user equipment device 108, a user television equipment device 110, and a user computer equipment device 112. For example, the WCD 152 may facilitate the delivery of communications from a cable TV 1202a to a cellular telephone network 1212 which is then delivered to a distribution facility 104. In certain embodiments, an IPG within the user equipment 1202a is capable of exchanging information with the distribution facility 104 via the second data channel established by the WCD 152 bridge from the user equipment 1202a to any one of the PLMN 1212, wireless access network 1210, another user equipment device 1202b, or other network 1208. Furthermore, the user equipment device 1202a may include capabilities such as a web browser, email messaging, SMS messaging, MMS messaging, and like messaging.

The user equipment device 1202a may also receive media program listing updates, application upgrades, and other information from the distribution facility 104 via the remote control 400. The remote control 400 or WCD 152 may act as a switch, router, proxy, and/or relay device to facilitate the transfer of information between the user equipment device 1202a and any other device connected to the remote control 400 or WCD 152. The user equipment devices 1202a and 1202b may include wireless transceivers 1204 and 1206 respectively that enable wireless communications using one or more wireless communications standards, protocols, and/or interfaces.

In another embodiment, a remote control 400 includes a display providing IPG information to a remote control 400 user. The user may interact with the remote control 400 to make PPV purchases or VCR-type commands (rewind, pause/play, fast forward) for VOD-type functionality, and the remote control 400 may communicate directly with a LAN without receiving input from a user equipment device, e.g., STB. The remote control 400 provides a communications bridge to a media content source. In certain embodiments where the remote control does not communicate with an end user device, the remote control 400 user acts as a "bridge" between the remote control 400 and the user equipment device. For example, the user views information displayed by the user equipment device 108 and then inputs commands into the remote control 400 in response to or to effect a response in the user equipment device 108.

In operation, the user equipment device 1202a establishes a data communications link and/or channel with at least one of the wireless access network 1210, PLMN 1212, user equipment device 1202b, or another wireless network 1208 respectively, via the remote control 400 to communicate with the distribution facility and/or a remote server such as the clearinghouse server 150. In one embodiment, a communications link between the user equipment device 1202a and the WCD 152 is via a wired cable connection, IR, or separate wireless interface other than the link between the remote control 400 and one of the wireless networks 1212, 1210, 1202, and 1208. For example, the remote control 400 may establish a first Bluetooth connection with the user equipment device 1202a and a second Bluetooth connection with the wireless access network 1210.

Once the data channel is established, an internal IPG, web browser, and/or other application such as an email client may exchange media content information in the same manner as described with respect to the WCD 152 in, for example, co-pending U.S. Application No. 11/403,709, entitled "Interactive Media Content Delivery Using Enhanced Wireless Back Channel Communications," having Attorney Docket No. UV-307A. The email client may be, without limitation, Eudora^{®} and Microsoft Outlook^{®}, and like email clients. The email client may be used to compose and/or exchange email messages that include text information that is substantially the same as the types of text information provided in SMS messages.

**In** one embodiment, the remote control 400 transmits a user command to the user equipment device 1202a. The user equipment device 1202a then transmits media control information including the user command back to the remote control 400. The remote control 400 then forwards this media control information onward to the a media content source, clearinghouse 150, and/or distribution facility 104.

The remote control may be a "buttons-only" remote with WiFi capabilities where the remote control issues commands to a user equipment device 108 (or 1202), e.g., STB. In this embodiment, a wireless link between the user equipment device and the remote control 400 (e.g., Bluetooth, IR, or WiFi) enables commands to then be transmitted back from the user equipment device 108 (or 1202) to the remote control 400. The remote control 400 may then communicate with a network, such as wireless access network 1210, and via the Internet to a media content source such as distribution facility 104 (via a clearinghouse 150 in some instances). The commands may be included in a media control message. In a further embodiment, the media control messages are delivered to a - clearinghouse 150 to enable formatting of the messages before delivery to one or more distribution facilities 104.

It will be apparent to those of ordinary skill in the art that methods involved in the present invention may be embodied in a computer program product that includes a computer usable medium. For example, such a computer usable medium may consist of a read only memory device, such as a CD ROM or DVD disk or conventional ROM devices, or a random access memory, such as a hard drive device or a computer diskette, having a computer readable program code stored thereon.

## Claims

1. A method for controlling streaming of media content to a media device, the method comprising:
receiving a first user input at a wireless communications device (152) to generate a first media control message for controlling delivery of the media content to the media device (108) which is remote from the wireless communications device;
transmitting the first media control message from the wireless communications device over a network;
receiving the first media control message over the network at a clearinghouse (150);
at the clearinghouse, determining a media provider distribution facility (104) to send the media control message to, based on the first media control message received from the wireless communications device (152);
converting the first media control message at the clearinghouse into a command format that is required by the determined media provider distribution facility (104);
transmitting the converted first media control message to the determined media provider distribution facility (104), wherein the converted first media control message contains information for use by the determined media provider distribution facility (104) to initiate streaming of the media content from the media provider distribution facility (104) to the media device (108);
receiving the media content at the media device; and
receiving a second user input at the wireless communications device to generate a second media control message for controlling playback of the media content at the media device.

2. The method of claim 1, wherein determining a media provider distribution facility (104) comprises determining the media provider distribution facility based on at least one of the location, identity, and subscriber information related to the communications device (152).

3. The method of claim 1 or 2, wherein the communications device (152) is a mobile phone and / or wherein the media device is a television equipment.

4. The method of any of claims 1 to 3, wherein the generated second media control message is transmitted over the network to the clearinghouse to control delivery of the media content to the media device.

5. The method of claim 4, wherein the second media control message is converted into the command format at the clearinghouse for the determined distribution facility and transmitted to the media provider distribution facility to effect the command in the second media control message.

6. The method of any of claims 1 to 5, wherein the converted first media control message comprises a command to retrieve the media content from a media content source (102).

7. The method of any of claims 1 to 6, wherein the media provider distribution facility (104) comprises a program distribution facility.

8. The method of any of claims 1 to 7, wherein the first media control message comprises an order for the media content.

9. The method of any of claims 1 to 8, wherein the second media control message includes a play, pause, fast-forward or rewind command.

10. A system for controlling streaming of media content, the system comprising:
a media device comprising means for receiving the media content;
a wireless communications device (152) comprising means for receiving a first user input to generate a first media control message for controlling delivery of media content to the media device (108) which is remote from the wireless communications device (152), and means for transmitting the first media control message from the wireless communications device over a network;
a clearinghouse comprising: means for receiving the first media control message from the wireless communications device (152) over the network; means for determining a media provider distribution facility (104) to send the media control message to, based on the first media control message received from the wireless communications device (152); means for converting the first media control message into a command format that is required by the determined media provider distribution facility (104); and means for transmitting the converted first media control message to the determined media provider distribution facility (104), wherein the converted first media control message contains information for use by the determined media provider distribution facility (104) to initiate streaming of the media content from the media provider distribution facility(104) to the media device (108); and
the wireless communications device further comprising means for receiving a second user input to generate a second media control message for controlling playback of the media content at the media device.

11. The system of claim 10, wherein the means for determining a media provider distribution facility (104) are configured to determine the media provider distribution facility (104) based on at least one of a location, an identity, and a subscriber information related to the wireless communications device (152).

12. The system of claim 10 or 11, wherein the wireless communications device (152) is a mobile phone and / or the media device is a television equipment.

13. The system of any of claims 10 to 12, wherein the generated second media control message is transmitted over the network to the clearinghouse to control delivery of the media content to the media device.

14. The system of claim 13, wherein the clearinghouse further comprises means for receiving the second media control message, converting the second media control message into the command format for the determined media provider distribution facility and transmitting the converted second media control message to the determined media provider distribution facility to effect the command in the second media control message.

15. The system of any of claims 10 to 14, wherein the converted first media control message comprises a command to retrieve, by the determined media provider distribution facility (104), the media content from a media content source (102).

16. The system of any of claims 10 to 15, wherein the first media control message comprises an order for the media content.

17. The system of any of claims 10 to 16 in which the second media control message includes a play, pause, fast-forward or rewind command.

## Patentansprüche

1. Verfahren zur Steuerung des Streamings von Medieninhalten zu einer Medienvorrichtung, wobei das Verfahren umfasst:
Empfangen einer ersten Benutzereingabe an einer drahtlosen Kommunikationseinrichtung (152) zum Erzeugen einer ersten Mediensteuernachricht zum Steuern der Zustellung des Medieninhalts an die von der drahtlosen Kommunikationseinrichtung die entfernte Medieneinrichtung (108);
Übertragen der ersten Mediensteuernachricht von der drahtlosen Kommunikationseinrichtung über ein Netzwerk;
Empfangen der ersten Mediensteuernachricht über das Netzwerk an einer Clearingstelle (150);
Bestimmen einer Medienanbieterverteilungseinrichtung (104) zum Senden der Mediensteuernachricht an, basierend auf der ersten Mediensteuernachricht, die von der drahtlosen Kommunikationseinrichtung (152) empfangen wird, an der Clearingstelle;
Umwandeln der ersten Mediensteuernachricht an der Clearingstelle in ein Befehlsformat, das von der bestimmten Medienanbieterverteilungseinrichtung (104) benötigt wird;
Übertragen der konvertierten ersten Mediensteuernachricht an die bestimmte Medienanbieterverteilungseinrichtung (104), wobei die konvertierte erste Mediensteuernachricht Informationen enthält, die von der bestimmten Medienanbieterverteilungseinrichtung (104) verwendet werden, um ein Streaming des Medieninhalts von der Medienanbieterverteilungseinrichtung (104) zu der Medienvorrichtung (108) zu initiieren;
Empfangen des Medieninhalts an der Medienvorrichtung; und
Empfangen einer zweiten Benutzereingabe an der drahtlosen Kommunikationsvorrichtung, um eine zweite Mediensteuernachricht zum Steuern der Wiedergabe des Medieninhalts an der Medienvorrichtung zu erzeugen.

2. Verfahren nach Anspruch 1, wobei das Bestimmen einer Medienanbieterverteilungseinrichtung (104) das Bestimmen der Medienanbieterverteilungseinrichtung basierend auf zumindest einer der Orts-, Identitäts- und Teilnehmerinformationen umfasst, die mit der Kommunikationsvorrichtung (152) in Zusammenhang stehen.

3. Verfahren nach Anspruch 1 oder 2, wobei die Kommunikationsvorrichtung (152) ein Mobiltelefon ist und/oder wobei die Medienvorrichtung eine Fernseheinrichtung ist.

4. Verfahren nach einem der Ansprüche 1 bis 3, wobei die erzeugte zweite Mediensteuernachricht über das Netzwerk an die Clearingstelle übertragen wird, um die Zustellung des Medieninhalts an die Medienvorrichtung zu steuern.

5. Verfahren nach Anspruch 4, wobei die zweite Mediensteuernachricht in das Befehlsformat an der Clearingstelle für die bestimmte Medienanbieterverteilungseinrichtung umgewandelt und an die Medienanbieterverteilungseinrichtung übertragen wird, um den Befehl in der zweiten Mediensteuernachricht auszuführen.

6. Verfahren nach einem der Ansprüche 1 bis 5, wobei die konvertierte erste Mediensteuernachricht einen Befehl zum Abrufen des Medieninhalts von einer Medieninhaltsquelle (102) umfasst.

7. Verfahren nach einem der Ansprüche 1 bis 6, wobei die Medienanbieterverteilungseinrichtung (104) eine Programmverteilungseinrichtung umfasst.

8. Verfahren nach einem der Ansprüche 1 bis 7, wobei die erste Mediensteuernachricht einen Auftrag für den Medieninhalt umfasst.

9. Verfahren nach einem der Ansprüche 1 bis 8, wobei die zweite Mediensteuernachricht einen Abspielbefehl, einen Pausenbefehl, einen Schnellvorlauf- oder einen Rückspulbefehl umfasst.

10. System zum Streamen eines Medieninhalts, wobei das System Folgendes umfasst:
eine Medienvorrichtung mit Mitteln zum Empfangen des Medieninhalts;
eine drahtlose Kommunikationsvorrichtung (152) mit Mitteln zum Empfangen einer ersten Benutzereingabe zum Erzeugen einer Mediensteuernachricht zum Steuern der Zustellung von Medieninhalt zu der Medienvorrichtung (108), die von der drahtlosen Kommunikationsvorrichtung (152) entfernt ist, und Mittel zum Übertragen der ersten Mediensteuernachricht von der drahtlosen Kommunikationsvorrichtung über ein Netzwerk;
ein Clearinghaus mit Mittel zum Empfangen der ersten Mediensteuernachricht von der drahtlosen Kommunikationsvorrichtung (152) über das Netzwerk; Mittel zum Bestimmen einer Medienanbieterverteilungseinrichtung (104) zum Senden der Mediensteuernachricht an, basierend auf der ersten Mediensteuernachricht, die von der drahtlosen Kommunikationsvorrichtung (152) empfangen wird; Mittel zum Konvertieren der ersten Mediensteuernachricht in ein Befehlsformat, das von der bestimmten Medienanbieterverteilungseinrichtung (104) benötigt wird; und Mittel zum Übertragen der konvertierten ersten Mediensteuernachricht an die bestimmte Medienanbieterverteilungseinrichtung (104), wobei die konvertierte erste Mediensteuernachricht Informationen zur Verwendung durch die bestimmte Medienanbieterverteilungseinrichtung enthält (104) zum Initiieren des Streamings des Medieninhalts von der Medienanbieterverteilungseinrichtung (104) zu der Medienvorrichtung (108); und
wobei die drahtlose Kommunikationsvorrichtung ferner Mittel zum Empfangen einer zweiten Benutzereingabe umfasst, um eine zweite Mediensteuernachricht zum Steuern der Wiedergabe des Medieninhalts an der Medienvorrichtung zu erzeugen.

11. System nach Anspruch 10, wobei die Mittel zum Bestimmen einer Medienanbieterverteilungseinrichtung (104) konfiguriert sind, um die Medienanbieterverteilungseinrichtung (104) basierend auf zumindest einem von Standort, einer Identität und einer Teilnehmerinformation, die mit der drahtlosen Kommunikationseinrichtung (152) in Zusammenhang steht, zu bestimmen.

12. System nach Anspruch 10 oder 11, wobei die drahtlose Kommunikationsvorrichtung (152) ein Mobiltelefon und/oder die Medienvorrichtung ein Fernsehgerät ist.

13. System nach einem der Ansprüche 10 bis 12, wobei die erzeugte zweite Mediensteuernachricht über das Netzwerk an die Clearingstelle übertragen wird, um die Zustellung des Medieninhalts an die Medienvorrichtung zu steuern.

14. System nach Anspruch 13, wobei die Clearingstelle ferner Mittel zum Empfangen der zweiten Mediensteuernachricht umfasst, Umwandeln der zweiten Mediensteuernachricht in das Befehlsformat für die bestimmte Medienanbieterverteilungseinrichtung und Übertragen der umgewandelten zweiten Mediensteuernachricht an die bestimmte Medienanbieterverteilungseinrichtung, um den Befehl in der zweiten Mediensteuernachricht zu bewirken.

15. System nach einem der Ansprüche 10 bis 14, wobei die konvertierte erste Mediensteuernachricht einen Befehl umfasst, um durch die bestimmte Medienanbieterverteilungseinrichtung (104) den Medieninhalt von einer Medieninhaltsquelle (102) abzurufen.

16. System nach einem der Ansprüche 10 bis 15, wobei die erste Mediensteuernachricht einen Auftrag für den Medieninhalt umfasst.

17. System nach einem der Ansprüche 10 bis 16, wobei die zweite Mediensteuernachricht einen Abspiel-, Pause-, Vor- oder Rückspulbefehl umfasst.

## Revendications

1. Procédé de contrôle de la diffusion en continu de contenu multimédia vers un dispositif multimédia, le procédé comprenant :
la réception d'une première entrée utilisateur au niveau d'un dispositif de communication sans fil (152) pour générer un premier message de contrôle multimédia pour contrôler la livraison du contenu multimédia au dispositif multimédia (108) qui est distant du dispositif de communication sans fil ;
la transmission du premier message de contrôle multimédia à partir du dispositif de communication sans fil sur un réseau ;
la réception du premier message de contrôle multimédia sur le réseau au niveau d'un centre d'échange (150) ;
au niveau du centre d'échange, la détermination d'une installation de distribution de fournisseur multimédia (104) à laquelle envoyer le message de contrôle multimédia, sur la base du premier message de contrôle multimédia reçu du dispositif de communication sans fil (152) ;
la conversion du premier message de contrôle multimédia au niveau du centre d'échange en un format de commande qui est requis par l'installation de distribution de fournisseur multimédia (104) déterminée ;
la transmission du premier message de contrôle multimédia converti à l'installation de distribution de fournisseur multimédia (104) déterminée, dans lequel le premier message de contrôle multimédia converti contient des informations destinées à être utilisées par l'installation de distribution de fournisseur multimédia (104) déterminée pour lancer la diffusion en continu du contenu multimédia de l'installation de distribution de fournisseur multimédia (104) au dispositif multimédia (108) ;
la réception du contenu multimédia au niveau du dispositif multimédia ; et
la réception d'une seconde entrée utilisateur au niveau du dispositif de communication sans fil pour générer un second message de contrôle multimédia pour contrôler la lecture du contenu multimédia au niveau du dispositif multimédia.

2. Procédé selon la revendication 1, dans lequel la détermination d'une installation de distribution de fournisseur multimédia (104) comprend la détermination de l'installation de distribution de fournisseur multimédia sur la base d'au moins l'une des informations de localisation, d'identité et d'abonné liées au dispositif de communication (152).

3. Procédé selon la revendication 1 ou 2, dans lequel le dispositif de communication (152) est un téléphone mobile et/ou dans lequel le dispositif multimédia est un équipement de télévision.

4. Procédé selon l'une quelconque des revendications 1 à 3, dans lequel le second message de contrôle multimédia généré est transmis sur le réseau au centre d'échange pour contrôler la livraison du contenu multimédia au dispositif multimédia.

5. Procédé selon la revendication 4, dans lequel le second message de contrôle multimédia est converti au format de commande au niveau du centre d'échange pour l'installation de distribution déterminée et transmis à l'installation de distribution de fournisseur multimédia pour exécuter la commande dans le second message de contrôle multimédia.

6. Procédé selon l'une quelconque des revendications 1 à 5, dans lequel le premier message de contrôle multimédia converti comprend une commande pour récupérer le contenu multimédia à partir d'une source de contenu multimédia (102).

7. Procédé selon l'une quelconque des revendications 1 à 6, dans lequel l'installation de distribution de fournisseur multimédia (104) comprend une installation de distribution de programmes.

8. Procédé selon l'une quelconque des revendications 1 à 7, dans lequel le premier message de contrôle multimédia comprend un ordre pour le contenu multimédia.

9. Procédé selon l'une quelconque des revendications 1 à 8, dans lequel le second message de contrôle multimédia comporte une commande de lecture, de pause, d'avance rapide ou de retour en arrière.

10. Système de contrôle de diffusion en continu de contenu multimédia, le système comprenant :
un dispositif multimédia comprenant des moyens pour recevoir le contenu multimédia ;
un dispositif de communication sans fil (152) comprenant des moyens pour recevoir une première entrée utilisateur pour générer un message de contrôle multimédia pour contrôler la livraison de contenu multimédia au dispositif multimédia (108) qui est distant du dispositif de communication sans fil (152), et des moyens pour transmettre le premier message de contrôle multimédia à partir du dispositif de communication sans fil sur un réseau ;
un centre d'échange comprenant : des moyens pour recevoir le premier message de contrôle multimédia provenant du dispositif de communication sans fil (152) sur le réseau ; des moyens pour déterminer une installation de distribution de fournisseur multimédia (104) à laquelle envoyer le message de contrôle multimédia, sur la base du premier message de contrôle multimédia reçu du dispositif de communication sans fil (152) ; des moyens pour convertir le premier message de contrôle multimédia en un format de commande qui est requis par l'installation de distribution de fournisseur multimédia (104) déterminée ; et des moyens pour transmettre le premier message de contrôle multimédia converti à l'installation de distribution de fournisseur multimédia (104) déterminée, dans lequel le premier message de contrôle multimédia converti contient des informations destinées à être utilisées par l'installation de distribution de fournisseur multimédia (104) déterminée pour lancer la diffusion en continu du contenu multimédia de l'installation de distribution de fournisseur multimédia (104) au dispositif multimédia (108) ; et
le dispositif de communication sans fil comprenant en outre des moyens pour recevoir une seconde entrée utilisateur pour générer un second message de contrôle multimédia pour contrôler la lecture du contenu multimédia au niveau du dispositif multimédia.

11. Système selon la revendication 10, dans lequel les moyens pour déterminer une installation de distribution de fournisseur multimédia (104) sont configurés pour déterminer l'installation de distribution de fournisseur multimédia (104) sur la base d'au moins l'une d'informations de localisation, d'identité et d'abonné liées au dispositif de communication sans fil (152).

12. Système selon la revendication 10 ou 11, dans lequel le dispositif de communication sans fil (152) est un téléphone mobile et/ou le dispositif multimédia est un équipement de télévision.

13. Système selon l'une quelconque des revendications 10 à 12, dans lequel le second message de contrôle multimédia généré est transmis sur le réseau au centre d'échange pour contrôler la livraison du contenu multimédia au dispositif multimédia.

14. Système selon la revendication 13, dans lequel le centre d'échange comprend en outre des moyens pour recevoir le second message de contrôle multimédia, convertir le second message de contrôle multimédia dans le format de commande pour l'installation de distribution de fournisseur multimédia déterminée et transmettre le second message de contrôle multimédia converti à l'installation de distribution de fournisseur multimédia déterminée pour exécuter la commande dans le second message de contrôle multimédia.

15. Système selon l'une quelconque des revendications 10 à 14, dans lequel le premier message de contrôle multimédia converti comprend une commande pour récupérer, par l'installation de distribution de fournisseur multimédia (104) déterminée, le contenu multimédia à partir d'une source de contenu multimédia (102).

16. Système selon l'une quelconque des revendications 10 à 15, dans lequel le premier message de contrôle multimédia comprend un ordre pour le contenu multimédia.

17. Système selon l'une quelconque des revendications 10 à 16, dans lequel le second message de contrôle multimédia comporte une commande de lecture, de pause, d'avance rapide ou de retour en arrière.
